# EUROPÄISCHE PATENTANMELDUNG

(11) **EP 4 645 162 A1**
(43) Veröffentlichungstag der Anmeldung: **05.11.2025**
(21) Anmeldenummer: 24173902.8
(22) Anmeldetag: 02.05.2024
(51) Int. Cl.: G06N 3/02, G06N 3/098

(54) **VERFAHREN UND SYSTEM ZUR INSPEKTION ODER ZUM BETRIEB EINES PRODUKTS**

(71) Anmelder: Siemens Aktiengesellschaft, 80333 München (DE)
(72) Erfinder: Blumauer-Hießl, Thomas, 1050 Wien (AT); Schall, Daniel, 2020 Hollabrunn (AT)
(74) Vertreter: Siemens Patent Attorneys

(57) **Zusammenfassung**

Computer-implementiertes Verfahren zur Inspektion oder zum Betrieb eines ersten Produkts (TD1), und folgende Schritte ausgeführt werden:
a) Übermitteln eines bereitgestellten globalen Modells (GM) vom ersten Produkt (TD1) oder dessen Betrieb vom Server (S), an den ersten Klienten (C1) und zweiten Klienten (C2),
b) Erfassen eines ersten Datensatzes (DS1) vom ersten Produkt (TD1) oder dessen Betrieb mit ersten Produktparametern des ersten Produkt (TD1) als jeweilige erste Teilmengen (C1.1-C1.3), und erzeugen und trainieren von jeweiligen ersten lokalen Modellen (LM1.1-LM1.3) mit den jeweiligen ersten Teilmengen (C1.1-C1.3),
c) Erfassen eines jeweiligen zweiten Datensatzes (DS2) vom jeweiligen zweiten Produkt (TD2) oder dessen Betrieb mit jeweiligen zweiten Produktparametern des jeweiligen zweiten Produkt (TD2) als jeweilige zweite Teilmengen (C2.1-C2.3), und erzeugen und trainieren von jeweiligen zweiten lokalen Modellen (LM2.1-LM2.3) mit den jeweiligen zweiten Teilmengen (C2.1-C2.3),
d) Durchführen einer Ähnlichkeitsanalyse zwischen Modellen der ersten und der zweiten lokalen Modelle (LM1.1-LM1.3, LM2.1-LM2.3), und zuordnen dieser ähnlichen Modelle zu einer gemeinsamen Modell-Gruppe (G1-G3),
e) Trainieren eines globalen Detail-Modells (M1) auf Basis des Modells der gemeinsamen Modell-Gruppe (G1-G3) und übertragen an den ersten Klienten (C1),
f) Anwenden des Detail-Modells (M1) auf das erste Produkt (D1) zur Inspektion oder dessen Betrieb, durch den ersten Klienten (C1).

## Beschreibung

Die Erfindung betrifft ein computer-implementiertes Verfahren und ein System zur Inspektion oder zum Betrieb eines ersten Produkts, sowie eines Computer-Programm-Produkts.

Heutzutage wird im industriellen Umfeld künstliche Intelligenz eingesetzt, um hergestellte Produkte optisch zu inspizieren oder Geräte im Betrieb zu überwachen oder zu steuert.

Dazu kann das Prinzip des föderierten Lernens (engl. "federated learning", kurz FL) eingesetzt werden, um Modelle auf Basis künstlicher Intelligenz rasch und einfach anwenden zu können, wobei Klienten-Server-Systeme zum Einsatz kommen können.

Jedoch hat es sich gezeigt, dass es bei Verwendung von künstlicher Intelligenz zu einer unzureichenden Modellgenauigkeit aufgrund multimodaler Datenverteilungen von Klienten kommen kann.

Die Modellleistung kann schlecht sein, wenn beispielsweise FL auf Klienten mit Daten aus mehreren zugrunde liegenden Datenverteilungen und Quellen angewendet wird, da kein anderer ähnlicher Client für die Zusammenarbeit geeignet ist, da eine multimodalen Datenverteilung je Klienten zurückzuführen sein kann.

Dies ist insbesondere bei Industriekunden der Fall, bei denen mehrere Datenquellen, wie beispielswese Sensoren an Produktionsmaschinen, in einer fabrikweiten Datenbank verwendet werden, die für lokale Schulungen im FL-Kontext verwendet wird.

Im Stand der Technik ist die Verwendung eines Gaußschen Mischungsmodells für jeden Klienten bekannt, sowie eine gemeinsame Nutzung der resultierenden Mittelwert- (µ) und Sigma- (σ) Parameter mit dem Server, der sie wiederum aggregiert und auf dieser Grundlage eine global gemeinsame multimodale Verteilung berechnet.

Kunden personalisieren das resultierende globale FL-Modell basierend auf der Differenz zur global aggregierten multimodalen Verteilung

Die bekannten Ansätze führen jedoch zu keiner ausreichenden Modellgenauigkeit.

Es ist daher Aufgabe der Erfindung die Modellgenauigkeit bei der Inspektion eines Produkts oder dem Betrieb eines Geräts weiter zu verbessern.

Die erfindungsgemäße Aufgabe wird gelöst durch ein computer-implementiertes Verfahren zur Inspektion oder zum Betrieb eines ersten Produkts, umfassend ein System mit einem Server, mit einem ersten Klienten, welcher dem ersten Produkt zugeordnet ist, und mit zumindest einem zweiten Klienten, welcher einem jeweiligen zweiten Produkt zugeordnet ist, und folgende Schritte ausgeführt werden:
a) Übermitteln eines bereitgestellten globalen Modells vom ersten Produkt oder dessen Betrieb vom Server, welches Modell auf Basis künstlicher Intelligenz in Form von Modellgewichten und einer Modellstruktur festgelegt ist, an den ersten Klienten und den zumindest einen zweiten Klienten,
b) Erfassen eines ersten Datensatzes vom ersten Produkt oder dessen Betrieb mit zumindest zwei ersten Produktparametern des ersten Produkt als jeweilige erste Teilmengen des ersten Datensatzes mit einem verbundenen entsprechenden Erfassungsmittel, und, ausgehend vom globalen Modell, erzeugen und trainieren von zumindest zwei jeweiligen ersten lokalen Modellen mit den jeweiligen ersten Teilmengen, und übermitteln der zumindest zwei jeweiligen ersten lokalen Modelle an den Server in Form von Modellgewichten und einer Modellstruktur, durch den ersten Klienten,
c) Erfassen eines jeweiligen zweiten Datensatzes vom jeweiligen zweiten Produkt oder dessen Betrieb mit jeweiligen zumindest zwei zweiten Produktparametern des jeweiligen zweiten Produkt als jeweilige zweite Teilmengen des jeweiligen zweiten Datensatzes mit einem verbundenen entsprechenden Erfassungsmittel, und, ausgehend vom globalen Modell, erzeugen und trainieren von zumindest zwei jeweiligen zweiten lokalen Modellen mit den jeweiligen zweiten Teilmengen, und übermitteln der zumindest zwei jeweiligen zweiten lokalen Modelle an den Server in Form von Modellgewichten und einer Modellstruktur, durch den jeweiligen zweiten Klienten,
d) Durchführen einer Ähnlichkeitsanalyse zwischen Modellen der ersten und der zweiten lokalen Modelle, und bei Vorliegen einer Ähnlichkeit zwischen einem Modell der ersten lokalen Modelle und einem Modell der zweiten lokalen Modelle, zuordnen dieser ähnlichen Modelle zu einer gemeinsamen Modell-Gruppe, durch den Server,
e) Trainieren zumindest eines globalen Detail-Modells auf Basis des Modellsder gemeinsamen Modell-Gruppe und übertragen an den ersten Klienten, durch den Server,
f) Anwenden des Detail-Modells auf das erste Produkt zur Inspektion oder dessen Betrieb, durch den ersten Klienten.

Die Erfindung sieht vor, Teilmengen von Klienten (Sub-Klienten, Unter-Klienten) zu erstellen, die auf einer gegebenen ursprünglichen Menge von Klienten mit einer multimodalen Verteilung basieren.

Jeder generierte Unter-Klient wird dann einer Kohorte bzw. Gruppe mit anderen Unter-Klienten zugeordnet, die ähnliche Datenverteilungen teilen.

Dadurch können zueinander ähnliche Klienten gemeinsam zu einem eigenen Modell beitragen, welches eine verbesserte Modell-Genauigkeit aufweist.

Die Erfindung sieht vor, dass "virtuelle" Unter-Klienten erstellt werden, die spezifisch für zugrunde liegende Entitäten sind, wie beispielweise Produktionslinien oder Jahreszeiten, wie beispielweise separate Modelle pro Monat.

Die spezifischen Modelle können für Inferenzdienste der jeweiligen Entitäten oder in der jeweiligen Jahreszeit entsprechend verwendet werden.

Daher werden potenziell leistungsschwache Modelle nicht allgemein angewendet, also ein globales Fabrikmodell wird nicht für eine einzelne Produktionslinie verwendet.

Ferner wird durch ein Klienten-Trennung (engl. "dient splitting") die Wahrscheinlichkeit erhöht, dass andere Untermandanten, beispielswiese aus anderen Fabriken eine ähnliche Datenverteilung haben.

Daher kann die Kohorten- bzw. Gruppen-Bildung die Chance auf ein leistungsfähiges personalisiertes Modell weiter erhöhen.

Bei der Gruppen- oder Kohortenbildung kann ein Gruppierungsansatz (engl. "clustering") angewendet werden, um die neuen Klienten in Kohorten mit anderen ähnlichen Klienten zu aggregieren.

Dazu können statistischen Momente der Klienten-Datensätze angewendet werden, wie Mittelwert, Standardabweichung usw. als Merkmale für die Gruppierung.

Es kann ferner von Vorteil sein, Klienten in Bezug auf die ursprüngliche Datenquelle aufzuteilen, wenn dies möglich ist, beispielweise durch Aufteilen von Daten von Fabrik-Klienten in Teilmengen für genauere Produktionslinien-Klienten.

Basierend auf diesem neuen Klienten-Design kann die Modellperformance durch Personalisierung weiter verbessert werden.

Mit einem Produkt kann ein zu analysierender oder zu inspizierender Gegenstand gemeint sein, welcher mit optischen oder anderen elektronischen oder magnetischen Sensoren erfasst wird, beispielsweise in seinem äußeren Erscheinungsbild.

Ein Erfassungsmittel zur Erfassung von Eigenschaften des Produkts kann eine Erfassungs-Vorrichtung sein, welche dazu eingerichtet ist, das hergestellte Erzeugnis mit Sensoren zu erfassen, beispielweise das äußere Erscheinungsbild oder geometrische, mechanische, elektrische, magnetische Eigenschaften des Erzeugnisses.

Zusätzlich kann mit dem Produkt aber auch ein zu analysierendes oder zu inspizierendes technisches Gerät bei dessen Betrieb gemeint sein, welcher mit optischen oder anderen elektronischen oder magnetischen Sensoren erfasst wird, beispielsweise mit einer Betriebsspannung, einer Leistungsaufnahme, Vibrationen, Temperatur, Drehbewegungen, etc., welche durch Betriebsdaten beim Betrieb erfasst werden.

Ein Erfassungsmittel zur Erfassung von Betriebsparametern des technischen Geräts kann eine Erfassungs-Vorrichtung sein, welche dazu eingerichtet ist, den Betrieb des Geräts mit Sensoren zu erfassen, beispielweise mechanische, elektrische, magnetische, thermische Betriebsparameter des Geräts oder dessen Umgebung.

Ein Betriebsparameter kann daher durch eine entsprechende Messgröße gebildet sein, wobei die Messgröße mit der Erfassungs-Vorrichtung und deren Sensor oder mehreren Sensoren bestimmt werden kann.

Die Erfassungs-Vorrichtung kann über eine Rechenvorrichtung mit einem Prozessor und einem Speicher verfügen.

Es ist klar, dass auch mehrere unterschiedliche Betriebsparameter erfasst und zur Modell-Erzeugung und zum Modell-Training herangezogen werden können, entweder einzeln oder in Kombination mit anderen Betriebsparametern.

Server und Klienten weisen jeweils eine Rechenvorrichtung mit einem Prozessor und einem Speicher auf.

Das Modell auf Basis künstlicher Intelligenz kann ein neuronales Netz sein, welches in Form von Modellgewichten und einer Modellstruktur beschrieben wird.

Als neuronales Netz wird in den Neurowissenschaften eine beliebige Anzahl miteinander verbundener Neuronen bezeichnet, die als Teil eines Nervensystems einen auf bestimmte Funktionen ausgerichteten Zusammenhang bilden.

Die einzelnen Verbindungen werden durch Modellgewichte ausgedrückt, und die Struktur des Netzes als Modellstruktur.

In der Statistik, insbesondere in der Multivariaten Statistik, können für die Messung der Ähnlichkeit zwischen verschiedenen Objekten Ähnlichkeits- und Distanzmaße herangezogen werden, wobei in der Regel Ähnlichkeitsmaße für nominal oder ordinal skalierte Variablen genutzt und Distanzmaße für metrisch skalierte Variablen (d. h. für Intervall- und Verhältnisskala) verwendet werden.

Für eine Ähnlichkeitsanalyse ist beispielsweise auch eine Korrelationsfunktion anwendbar.

Bei der Prüfung auf Ähnlichkeit zwischen einem Modell der ersten lokalen Modelle und einem Modell der zweiten lokalen Modelle können auch mehrere gemeinsame Modell-Gruppen gebildet werden, wobei für jede dieser gemeinsamen Modell-Gruppen ein separates globales Detail-Modell erzeugt und trainiert wird.

In einer Weiterbildung der Erfindung ist es vorgesehen, dass das erste und das zumindest eine zweite Produkt jeweils von einer Produktionsmaschine hergestellte Erzeugnisse sind, und die Inspektion des jeweiligen Erzeugnisses durch ein jeweiliges technisches Inspektionsmittel erfolgt, welches dazu eingerichtet ist, das jeweils hergestellte Erzeugnis als jeweiligen Datensatz zu erfassen, bevorzugt durch eine visuelle Inspektionsvorrichtung, besonders bevorzugt eine optische Kamera.

Mit einem Produkt kann ein Gegenstand gemeint sein, welcher mit optischen oder anderen elektronischen oder magnetischen Sensoren erfasst wird, beispielsweise in seinem äußeren Erscheinungsbild, um eine korrekte Produktion zu kontrollieren und schadhafte Produkte auszusortieren.

Die Erfindung sieht einen föderierten Ansatz vor, mit welchem ein Datenschutz für die Daten der einzelnen Klienten sichergestellt ist, indem für die jeweiligen Modelle nur Modellgewichte und Modellstruktur zwischen Klienten und Server übermittelt werden.

In einer Weiterbildung der Erfindung ist es vorgesehen, dass für das jeweilig hergestellte Erzeugnis die jeweiligen zwei ersten Produktparameter des ersten Produkts und die jeweiligen zwei zweiten Produktparameter des jeweiligen zweiten Produkt durch die jeweiligen technischen Inspektionsmittel festgelegt sind, welche dazu eingerichtet ist, das jeweils hergestellte Erzeugnis als jeweiligen Datensatz zu erfassen, bevorzugt durch Positionsdaten oder Ausrichtungsdaten oder Betriebs-Parameter des Inspektionsmittels.

Betriebs-Parameter des Inspektionsmittels können beispielsweise die Lage des Erzeugnisses auf einer Transportvorrichtung, wie ein Förderband, sein, sowie Einstellungen des Inspektionsmittels selbst, wie optische Einstellungen einer Kamera, wie Fokus, Belichtungszeit, etc.

In einer Weiterbildung der Erfindung ist es vorgesehen, dass das erste und das zumindest eine zweite Produkt jeweils ein technisches Gerät sind, und das jeweilige technische Gerät mit dem jeweiligen Klienten zum Betrieb durch den jeweiligen Klienten verbunden ist.

Zusätzlich oder alternativ kann mit dem Produkt aber auch ein technisches Gerät bei dessen Betrieb gemeint sein, welcher mit optischen oder anderen elektronischen oder magnetischen Sensoren erfasst wird, beispielsweise mit einer Betriebsspannung, einer Leistungsaufnahme, Vibrationen, Temperatur, Drehbewegungen, etc., welche durch Betriebsdaten beziehungsweise Betriebs-Parameter beim Betrieb erfasst werden

In einer Weiterbildung der Erfindung ist es vorgesehen, dass der jeweilige Datensatz einen zulässigen oder nichtzulässigen Betriebsmodus des jeweiligen technischen Geräts beschreibt.

Beispielsweise kann für ein Gerät ein zulässiger Dauerbetriebsmodus festgelegt sein, welcher mit dem erfindungsgemäßen Verfahren überwacht werden soll, um eine vorausschauende Wartung durchzuführen, sowie bestimmte Fehler-Betriebsmodi, in welchen ein verkürztes Wartungsintervall vorgesehen werden muss.

In einer Weiterbildung der Erfindung ist es vorgesehen, dass der jeweilige Datensatz einen Betriebsparameter des jeweiligen technischen Geräts beschreibt.

Zur Anwendung einer Inferenz kann ein bestimmter Betriebsparameter des Geräts herangezogen werden, durch Betriebsdaten beim Betrieb des Geräts erfasst wird.

In einer Weiterbildung der Erfindung ist es vorgesehen, dass der Betriebsparameter des jeweiligen technischen Geräts eine Betriebsspannung oder eine Stromaufnahme oder eine Leistungsaufnahme oder eine Betriebstemperatur oder eine Umgebungstemperatur oder eine elektrische Feldstärke oder eine magnetische Feldstärke oder eine Rechenauslastung oder eine Speicherauslastung ist.

Zur Anwendung einer Inferenz kann ein bestimmter Betriebsparameter des Geräts herangezogen werden, beispielsweise eine Betriebsspannung, eine Leistungsaufnahme, Vibrationen, Temperatur oder Drehbewegungen des Geräts, welche durch Betriebsdaten beim Betrieb des Geräts erfasst werden.

In einer Weiterbildung der Erfindung ist es vorgesehen, dass die Ähnlichkeitsanalyse durchgeführt wird, indem jeweils eine statistische Verteilungsfunktion durch den ersten Klienten auf die ersten Teilmengen angewandt wird, und durch den jeweiligen zweiten Klienten auf die zweiten Teilmengen angewandt wird, und die jeweiligen Verteilungsfunktionen an den Server übermittelt werden, und vom Server die Verteilungsfunktionen miteinander auf Ähnlichkeit verglichen werden.

Dadurch können auf einfache Weise ähnliche Teilmengen im erfassten Datensatz erkannt werden und auf anonyme Weise an den Server übermittelt werden.

Dadurch wird erreicht, dass keine sensiblen Fertigungsdaten oder Betriebsdaten dem Server preisgegeben werden, was dem Datenschutz und der Wahrung von Betriebsgeheimnissen von Produktionsstätten überaus dienlich ist.

In einer Weiterbildung der Erfindung ist es vorgesehen, dass die Ähnlichkeitsanalyse durchgeführt wird, indem der jeweilige Klient für die jeweilige Teilmenge jeweilige Metainformationen des jeweiligen Betriebsparameters des jeweiligen Produkts durch das jeweiligen Erfassungsmittel bereitstellt, und die jeweiligen Metainformationen vom jeweiligen Klienten an den Server übertragen werden, und vom Server die Metainformationen miteinander auf Ähnlichkeit verglichen werden.

Unter Metadaten oder Metainformationen werden im vorliegenden Zusammenhang Beschreibungsinformationen zu den Teilmengen verstanden, also ohne die wertmäßigen Daten der erfassten Betriebsparameter selbst, welche auch kryptisch sein können, also einfache Bezeichnungen oder Namen zu Gruppen oder Teilmengen.

Dadurch können auf einfache Weise ähnliche Teilmengen im erfassten Datensatz erkannt werden und auf anonyme Weise an den Server übermittelt werden.

Dadurch wird erreicht, dass keine sensiblen Fertigungsdaten oder Betriebsdaten dem Server preisgegeben werden, was dem Datenschutz und der Wahrung von Betriebsgeheimnissen von Produktionsstätten überaus dienlich ist.

In einer Weiterbildung der Erfindung ist es vorgesehen, dass die Ähnlichkeitsanalyse anhand von jeweiligen vorbestimmten, überlappenden Grenzbereiche feststellt wird.

Dadurch kann die Ähnlichkeitsanalyse auf einfache Weise durchgeführt werden, indem beispielsweise zulässige Grenzbereiche für bestimmte Betriebsmoden vordefiniert werden.

Ein Grenzbereich kann beispielsweise durch einen jeweiligen unteren und oberen Grenzwert festgelegt werden, wobei diese Grenzwerte über einen Betriebsparameter variabel sein können, also durch eine mathematische Funktion, wie eine Verteilung definiert sein.

Ein Grenzbereich kann je nach der angewandten Ähnlichkeitsanalyse zugrunde liegenden mathematischen Funktion oder Verteilung dadurch definiert werden, das ein berechneter Ähnlichkeitswert innerhalb oder auch außerhalb des unteren und oberen Grenzwerts liegt.

Die erfindungsgemäße Aufgabe wird auch durch ein System zum Betrieb eines technischen Geräts gelöst, umfassend einen Server, einen verbundenen ersten Klienten und zumindest einen verbundenen zweiten Klienten, und der erste Klient mit dem technischen Gerät verbunden ist, wobei das System dazu eingerichtet ist, das erfindungsgemäße Verfahren auszuführen.

Die erfindungsgemäße Aufgabe wird auch durch ein Computer-Programm-Produkt mit darin gespeicherten maschinenlesbaren Anweisungen gelöst, die, wenn sie von dem erfindungsgemäßen System ausgeführt werden, dieses veranlassen, das erfindungsgemäße Verfahren auszuführen.

In den folgenden Figuren wird die Erfindung anhand eines Ausführungsbeispiels im Detail beschrieben. In den Figuren zeigt
- Fig. 1: ein vereinfachtes Blockschaltbild mit einzelnen Verfahrensschritten eines Ausführungsbeispiels der Erfindung,
- Fig. 2: ein Flussdiagramm mit einem Ausführungsbeispiel für das erfindungsgemäße Erfindung.

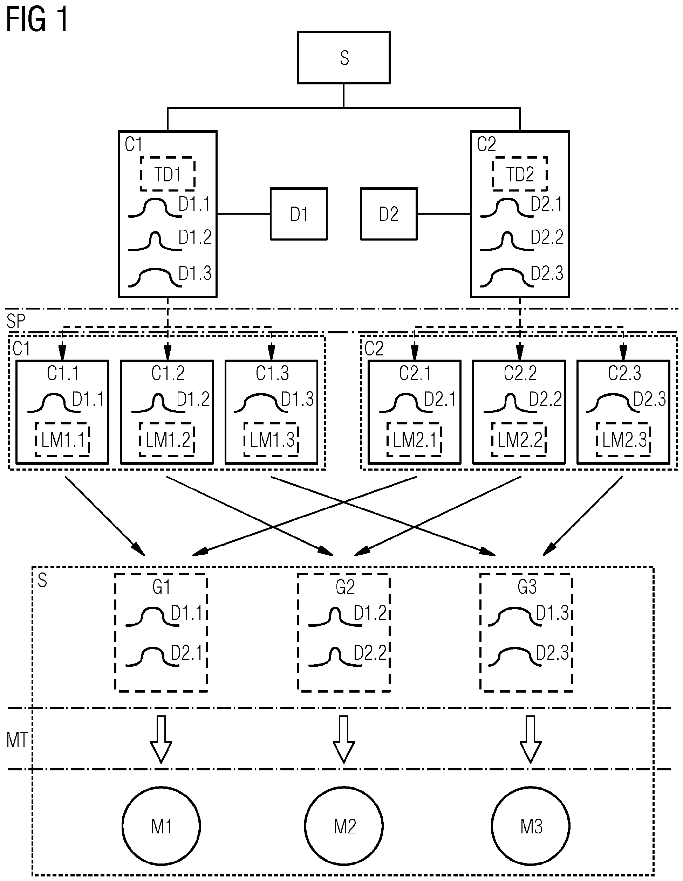

**Fig. 1** zeigt ein Ausführungsbeispiel der Erfindung als vereinfachtes Blockschaltbild und beschreibt ein Verfahren zur Inspektion oder zum Betrieb eines ersten Produkts TD1.

Dabei wird das Verfahren auf ein System mit einem Server S, mit einem ersten Klienten C1 und einem zweiten Klienten C2 angewandt.

Der erste Klienten C1 ist einem ersten Produkt TD1 zugeordnet.

Der zweite Klienten C2 ist einem zweiten Produkt TD2 zugeordnet.

Folgende Verfahrens-Schritte werden ausgeführt:
a) Übermitteln eines bereitgestellten globalen Modells GM vom ersten Produkt TD1 vom Server S, welches Modell auf Basis künstlicher Intelligenz in Form von Modellgewichten und einer Modellstruktur festgelegt ist, an den ersten Klienten C1 und den zweiten Klienten C2,
b) Erfassen eines ersten Datensatzes DS1 vom ersten Produkt TD1 mit drei ersten Produktparametern des ersten Produkts TD1 als jeweilige erste Teilmengen C1.1-C1.3 des ersten Datensatzes DS1 mit einem verbundenen entsprechenden Erfassungsmittel, und, ausgehend vom globalen Modell GM, erzeugen und trainieren von drei jeweiligen ersten lokalen Modellen LM1.1-LM1.3 mit den jeweiligen ersten Teilmengen C1.1-C1.3, und übermitteln der drei jeweiligen ersten lokalen Modelle LM1.1-LM1.3 an den Server S in Form von Modellgewichten und einer Modellstruktur, durch den ersten Klienten C1,
c) Erfassen eines jeweiligen zweiten Datensatzes DS2 vom jeweiligen zweiten Produkt TD2 oder dessen Betrieb mit jeweiligen zumindest zwei zweiten Produktparametern des jeweiligen zweiten Produkt TD2 als jeweilige zweite Teilmengen C2.1-C2.3 des jeweiligen zweiten Datensatzes DS2 mit einem verbundenen entsprechenden Erfassungsmittel, und, ausgehend vom globalen Modell GM, erzeugen und trainieren von drei jeweiligen zweiten lokalen Modellen LM2.1-LM2.3 mit den jeweiligen zweiten Teilmengen C1.1-C1.3, und übermitteln der zumindest zwei jeweiligen zweiten lokalen Modelle LM2.1-LM2.3 an den Server S in Form von Modellgewichten und einer Modellstruktur, durch den jeweiligen zweiten Klienten C2,
d) Durchführen einer Ähnlichkeitsanalyse zwischen Modellen der ersten und der zweiten lokalen Modelle LM1.1-LM1.3, LM2.1-LM2.3, und bei Vorliegen einer Ähnlichkeit zwischen einem Modell der ersten lokalen Modelle LM1.1-LM1.3 und einem Modell der zweiten lokalen Modelle LM2.1-LM2.3, zuordnen dieser ähnlichen Modelle zu einer gemeinsamen Modell-Gruppe G1-G3, durch den Server S,
e) Trainieren zumindest eines globalen Detail-Modells M1 auf Basis des Modells der gemeinsamen Modell-Gruppe G1-G3 und übertragen an den ersten Klienten C1, durch den Server S,
f) Anwenden des Detail-Modells M1 auf das erste Produkt D1 zur Inspektion oder dessen Betrieb, durch den ersten Klienten C1.

Das erste und das zweite Produkt ist jeweils ein von einer Produktionsmaschine hergestelltes Erzeugnis.

Die Inspektion des Erzeugnisses kann durch ein technisches Inspektionsmittel erfolgen, welches dazu eingerichtet ist, das hergestellte Erzeugnis zu erfassen, wie eine optische Kamera (engl. "visual quality inspection", kurz VQI).

Die jeweiligen Produktparameter werden durch jeweilige Sensor-Mittel oder Erfassungsmittel bereitgestellt, welche vom jeweiligen Klienten C1, C2 umfasst sind, und dazu eingerichtet sind, den Zustand oder Produkteigenschaften des hergestellten Erzeugnisses TD1, TD2 zu erfassen.

Ein Erfassungsmittel zur Erfassung von Eigenschaften des Produkts kann eine Erfassungs-Vorrichtung sein, welche dazu eingerichtet ist, das hergestellte Erzeugnis mit Sensoren zu erfassen, beispielweise das äußere Erscheinungsbild oder geometrische, mechanische, elektrische, magnetische Eigenschaften des Erzeugnisses, wie durch eine Kamera für das äußere Erscheinungsbild des Erzeugnisses.

Das Bilden von Teilmengen C1.1-C1.3, C2.1-C2.3 in den Schritten b) und c) kann auch als "Splitting" SP bezeichnet werden und erfolgt durch den jeweiligen Klienten C1, C2.

Das Modell-Training MT des ersten, des zweiten und des dritten globalen Detail-Modells M1-M3 im Schritt e) erfolgt durch den Server S.

Die Ähnlichkeitsanalyse wird durchgeführt, indem jeweils eine statistische Verteilungsfunktion D1.1-D1.3, D2.1-D2.3 durch den ersten Klienten C1 auf die ersten Teilmengen C1.1-C1.3 angewandt wird, und durch den jeweiligen zweiten Klienten C2 auf die zweiten Teilmengen C2.1-C2.3 angewandt wird.

Die jeweiligen Verteilungsfunktionen D1.1-D1.3, D2.1-D2.3 werden an den ServerS übermittelt.

Vom Server S werden die Verteilungsfunktionen D1.1-D1.3, D2.1-D2.3 miteinander auf Ähnlichkeit verglichen, beispielsweise durch Anwendung einer Korrelationsfunktion.

Die Ähnlichkeitsanalyse kann durchgeführt werden, indem der jeweilige Klient C1, C2 für die jeweilige Teilmenge C1.1-C1.3, C2.1-C2.3 jeweilige Metainformationen des jeweiligen Betriebsparameters des jeweiligen Produkts TD1, TD2 durch das jeweiligen Erfassungsmittel bereitstellt, und die jeweiligen Metainformationen vom jeweiligen Klienten C1, C2 an den Server S übertragen werden, und vom Server S die Metainformationen miteinander auf Ähnlichkeit verglichen werden.

Die Ähnlichkeitsanalyse kann anhand von jeweiligen vorbestimmten, überlappenden Grenzbereiche feststellt werden.

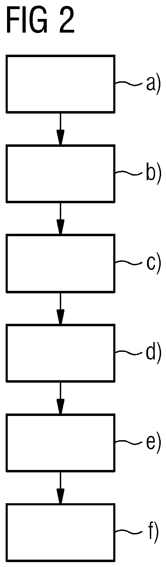

**Fig. 2** stellt ein Ausführungsbeispiel der Erfindung in Form eines Flussdiagramms dar.

Das Verfahren zur Inspektion oder zum Betrieb eines ersten Produkts TD1 ist zumindest in einem Schritt computer-implementiert.

*Unabhängig vom grammatikalischen Geschlecht eines bestimmten Begriffes sind Personen mit männlicher, weiblicher oder anderer Geschlechteridentität mit umfasst.*

### Bezugszeichenliste:

- C1, C2: Klient
- C1.1-C1.3, C2.1-C2.3: Teilmenge
- DS1, DS2: Datensatz
- D1.1-D1.3, D2.1-D2.3: Verteilungsfunktion
- G1-G3: Gruppe
- GM: globales Modell
- LM1-LM3: lokales Modell
- M1-M3: Detail-Modell
- MT: Modell-Training
- S: Server
- SP: Bildung von Teilmengen (engl. "splitting")
- TD1, TD2: technisches Gerät

## Patentansprüche

1. Computer-implementiertes Verfahren zur Inspektion oder zum Betrieb eines ersten Produkts (TD1), umfassend ein System mit einem Server (S), mit einem ersten Klienten (C1), welcher dem ersten Produkt (TD1) zugeordnet ist, und mit zumindest einem zweiten Klienten (C2), welcher einem jeweiligen zweiten Produkt (TD2) zugeordnet ist, und folgende Schritte ausgeführt werden:
a) Übermitteln eines bereitgestellten globalen Modells (GM) vom ersten Produkt (TD1) oder dessen Betrieb vom Server (S), welches Modell auf Basis künstlicher Intelligenz in Form von Modellgewichten und einer Modellstruktur festgelegt ist, an den ersten Klienten (C1) und den zumindest einen zweiten Klienten (C2),
b) Erfassen eines ersten Datensatzes (DS1) vom ersten Produkt (TD1) oder dessen Betrieb mit zumindest zwei ersten Produktparametern des ersten Produkt (TD1) als jeweilige erste Teilmengen (C1.1-C1.3) des ersten Datensatzes (DS1) mit einem verbundenen entsprechenden Erfassungsmittel, und, ausgehend vom globalen Modell (GM), erzeugen und trainieren von zumindest zwei jeweiligen ersten lokalen Modellen (LM1.1-LM1.3) mit den jeweiligen ersten Teilmengen (C1.1-C1.3), und übermitteln der zumindest zwei jeweiligen ersten lokalen Modelle (LM1.1-LM1.3) an den Server (S) in Form von Modellgewichten und einer Modellstruktur, durch den ersten Klienten (C1),
c) Erfassen eines jeweiligen zweiten Datensatzes (DS2) vom jeweiligen zweiten Produkt (TD2) oder dessen Betrieb mit jeweiligen zumindest zwei zweiten Produktparametern des jeweiligen zweiten Produkt (TD2) als jeweilige zweite Teilmengen (C2.1-C2.3) des jeweiligen zweiten Datensatzes (DS2) mit einem verbundenen entsprechenden Erfassungsmittel, und, ausgehend vom globalen Modell (GM), erzeugen und trainieren von zumindest zwei jeweiligen zweiten lokalen Modellen (LM2.1-LM2.3) mit den jeweiligen zweiten Teilmengen (C2.1-C2.3), und übermitteln der zumindest zwei jeweiligen zweiten lokalen Modelle (LM2.1-LM2.3) an den Server (S) in Form von Modellgewichten und einer Modellstruktur, durch den jeweiligen zweiten Klienten (C2),
d) Durchführen einer Ähnlichkeitsanalyse zwischen Modellen der ersten und der zweiten lokalen Modelle (LM1.1-LM1.3, LM2.1-LM2.3), und bei Vorliegen einer Ähnlichkeit zwischen einem Modell der ersten lokalen Modelle (LM1.1-LM1.3) und einem Modell der zweiten lokalen Modelle (LM2.1-LM2.3), zuordnen dieser ähnlichen Modelle zu einer gemeinsamen Modell-Gruppe (G1-G3), durch den Server (S),
e) Trainieren zumindest eines globalen Detail-Modells (M1) auf Basis des Modells der gemeinsamen Modell-Gruppe (G1-G3) und übertragen an den ersten Klienten (C1), durch den Server (S),
f) Anwenden des Detail-Modells (M1) auf das erste Produkt (D1) zur Inspektion oder dessen Betrieb, durch den ersten Klienten (C1).

2. Verfahren nach Anspruch 1, wobei das erste und das zumindest eine zweite Produkt (TD1, TD2) jeweils von einer Produktionsmaschine hergestellte Erzeugnisse sind, und die Inspektion des jeweiligen Erzeugnisses (TD1, TD2) durch ein jeweiliges technisches Inspektionsmittel erfolgt, welches dazu eingerichtet ist, das jeweils hergestellte Erzeugnis (TD1, TD2) als jeweiligen Datensatz (DS1, DS2) zu erfassen, bevorzugt durch eine visuelle Inspektionsvorrichtung, besonders bevorzugt eine optische Kamera.

3. Verfahren nach dem vorhergehenden Anspruch, wobei für das jeweilig hergestellte Erzeugnis (TD1, TD2) die jeweiligen zwei ersten Produktparameter des ersten Produkts (TD1) und die jeweiligen zwei zweiten Produktparameter des jeweiligen zweiten Produkt (TD2) durch die jeweiligen technischen Inspektionsmittel festgelegt sind, welche dazu eingerichtet ist, das jeweils hergestellte Erzeugnis (TD1, TD2) als jeweiligen Datensatz (DS1, DS2) zu erfassen, bevorzugt durch Positionsdaten oder Ausrichtungsdaten oder Betriebs-Parameter des Inspektionsmittels.

4. Verfahren nach Anspruch 1, wobei das erste und das zumindest eine zweite Produkt jeweils ein technisches Gerät (TD1, TD2) sind, und das jeweilige technische Gerät (TD1, TD2) mit dem jeweiligen Klienten (C1, C2) zum Betrieb durch den jeweiligen Klienten (C1, C2) verbunden ist.

5. Verfahren nach dem vorhergehenden Anspruch, wobei der jeweilige Datensatz (DS1, DS2) einen zulässigen oder nichtzulässigen Betriebsmodus des jeweiligen technischen Geräts (TD1, TD2) beschreibt.

6. Verfahren nach einem der Ansprüche 4 oder 5, wobei der jeweilige Datensatz (DS1, DS2) einen Betriebsparameter des jeweiligen technischen Geräts (TD1, TD2) beschreibt.

7. Verfahren nach dem vorhergehenden Anspruch, wobei der Betriebsparameter des jeweiligen technischen Geräts (TD1, TD2) eine Betriebsspannung oder eine Stromaufnahme oder eine Leistungsaufnahme oder eine Betriebstemperatur oder eine Umgebungstemperatur oder eine elektrische Feldstärke oder eine magnetische Feldstärke oder eine Rechenauslastung oder eine Speicherauslastung ist.

8. Verfahren nach einem der vorhergehenden Ansprüche, wobei die Ähnlichkeitsanalyse durchgeführt wird, indem jeweils eine statistische Verteilungsfunktion (D1.1-D1.3, D2.1-D2.3) durch den ersten Klienten (C1) auf die ersten Teilmengen (C1.1-C1.3) angewandt wird, und durch den jeweiligen zweiten Klienten (C1) auf die zweiten Teilmengen (C1.1-C1.3) angewandt wird, und die jeweiligen Verteilungsfunktionen (D1.1-D1.3, D2.1-D2.3) an den Server (S) übermittelt werden, und vom Server (S) die Verteilungsfunktionen (D1.1-D1.3, D2.1-D2.3) miteinander auf Ähnlichkeit verglichen werden.

9. Verfahren nach einem der Ansprüche 1 bis 7, wobei die Ähnlichkeitsanalyse durchgeführt wird, indem der jeweilige Klient (C1, C2) für die jeweilige Teilmenge (C1.1-C1.3, C2.1-C2.3) jeweilige Metainformationen des jeweiligen Betriebsparameters des jeweiligen Produkts (TD1, TD2) durch das jeweiligen Erfassungsmittel bereitstellt, und die jeweiligen Metainformationen vom jeweiligen Klienten (C1, C2) an den Server (S) übertragen werden, und vom Server (S) die Metainformationen miteinander auf Ähnlichkeit verglichen werden.

10. Verfahren nach einem der Ansprüche 8 oder 9, wobei die Ähnlichkeitsanalyse anhand von jeweiligen vorbestimmten, überlappenden Grenzbereiche feststellt wird.

11. System zum Betrieb eines technischen Geräts mit einem Server (S), einem verbundenen ersten Klienten (C1) und zumindest einem verbundenen zweiten Klienten (C2), und der erste Klient (C1) mit dem technischen Gerät (TD1) verbunden ist, wobei das System dazu eingerichtet ist, das Verfahren nach einem der vorhergehenden Ansprüche auszuführen.

12. Computer-Programm-Produkt mit darin gespeicherten maschinenlesbaren Anweisungen, die, wenn sie von dem System nach einem der vorhergehenden Ansprüche ausgeführt werden, dieses veranlassen, das Verfahren nach einem der vorhergehenden Ansprüche auszuführen.
